Europäisches Patentamt

European Patent Office

Office européen des brevets

(11) Publication number: **0 097 239**
**B1**

## EUROPEAN PATENT SPECIFICATION

(45) Date of publication of patent specification: 27.09.89

(21) Application number: **83104485.4**

(22) Date of filing: **06.05.83**

(51) Int. Cl.⁴: **G 06 F 9/44,** G 06 F 9/46,
G 06 F 15/40

(54) Method and apparatus for restoring data in a computing system.

(30) Priority: 30.06.82 US 393967
21.06.82 US 390163
21.06.82 US 390454
21.06.82 US 390485
24.06.82 US 391629
29.06.82 US 393244

(43) Date of publication of application:
04.01.84 Bulletin 84/01

(45) Publication of the grant of the patent:
27.09.89 Bulletin 89/39

(84) Designated Contracting States:
DE FR GB

(56) References cited:
IBM PUBLICATION, SH4-5014-0 (no. 5748-XXJ),
August 1981, pages 151-172, New York, US
INTERNATIONAL SYMPOSIUM ON FAULT-
TOLERANT COMPUTING, 21st-23rd June 1976,
Pittsburgh, pages 23-29, IEEE, Long Beach, US;
C. MERAUD et al.: "Automatic rollback
techniques of the COPRA computer"

(73) Proprietor: **International Business Machines
Corporation**
**Old Orchard Road**
**Armonk, N.Y. 10504 (US)**

(72) Inventor: **Baker, Jerry Wayne**
**16340 Flaming Oak Lane**
**Morgan Hill California 95037 (US)**
Inventor: **Crus, Richard Anthony**
**1980 Dorrance Court**
**San Jose California 95125 (US)**
Inventor: **Haderle, Donald James**
**812 Lilac Way**
**Los Gatos California 95030 (US)**

(74) Representative: **Ahlman, Bertel**
**IBM Svenska AB Intellectual Property
Department**
**S-163 92 Stockholm (SE)**

(56) References cited:
REVIEW OF THE ELECTRICAL
COMMUNICATION LABORATORIES, vol. 26,
nos. 1-2, January-February 1978, pages 45-54,
Tokyo, JP; K. OHASHI et al.: "Recovery process
in a real time system"

Courier Press, Leamington Spa, England.

## Description

This invention relates to a computing apparatus and method for managing a database. More specifically, it relates to an apparatus and method for assuring atomicity of multi-row update operations such as in a relational database system.

In prior art data management systems, support is sometimes provided for assuring the autromicity of operations effecting a database. Such an operation is "atomic" if the operation either succeeds completely or it fails, in which latter case the state of the database is left unchanged.

The IBM Information Management System (IMS/VS) Version 1 (IBM is a registered trademark) provides support for assuring the atomicity of operations updating one record, or row of a table, at a time. However, there is no multi-row update facility in IMS/VS.

Database management systems which provide multirow updating operations include those based upon the relational mode, such as the IBM Research System R, an experimental database management system, and the IBM Sequel Query Language/Data System (SQL/DS). System R is described in M. W. Blasgen, et al, "System R: An Architectural Overview", *IBM System Journal*, Vol. 20, No. 1, 1981, pages 41—62. The IBM SQL/DS is described in "SQL/Data System Planning and Administration", IBM Publication SH4—5014—0, Program Number 5748—XXJ, Aug. 81, with the recovery considerations set forth at pages 9—1 to 9—19. Hereafter, reference to relational databases will be intended to include all database management models which allow multi-row update operations.

The SQL language, which is the external language for access to databases managed by System R or SQL/DS, provides operations for modifying the state of user-defined data, including UPDATE, DELETE, and INSERT operations which allow the SQL user to insert, update, or delete multiple rows (i.e., records) in a specified database table. As implemented in System R and SQL/DS, SQL allows partial success of such multi-row operations, such that a detected error in the middle of a multi-row UPDATE, for example, will cause termination of the operation with only a subset of the required records updated. This leaves the table in an inconsistent state, and the application program requesting the SQL operation has no practical means of determining exactly which records were or were not updated. If recoverable files are used, a rollback, or recovery operation must be performed when such an error is detected to cause all work within the entire unit of recovery (UR), i.e. transaction, to be undone. Unfortunately, this action not only cancels the effects of the operation causing the error, but also the effects of any other operation in the same unit of recovery. The problem is more serious if non-recoverable files are in use. In such a case the rollback process has no effect, and the application programmer must handle the recovery of the data.

Various proposals have been made to avoid the necessity for backing out a complete transaction in the event of an error during a sequence of multi-row update operations. Thus, it has been suggested to "begin each complex operation with a savepoint and backing up to this savepoint" in the event of a failure during the operation. See, for example, Grey, et al, "The Recovery Manager of a Data Management System, IBM Research Publication, *Computer Science* RJ 2623 (#33801), August 15, 1979. (See also, ACM Computing Surveys, Vol 13, No. 2, June 1981, pages 223—242.) Grey, in this discussion of the System R, notes that such a savepoint technique was not implemented, but was rather an unsolved language design problem.

The present invention is defined in the attached claims.

This invention provides a method and apparatus for assuring atomicity of user requested multi-row update operations to tables such as in a relational database, guaranteeing that for any update operation that succeeds all stated effects will have occurred and that for any update operation that fails the system state as perceived by the user remains unchanged. This is accomplished by establishing, in response to a multi-row update operation request, an execution module containing machine language code instructions implementing the update operation request with a savepoint request at the beginning of the execution module. For each set of instructions in or called by the execution module which modifies the user perceived system state, undo information is logged selectively to a hard or soft log. Upon completing the execution module without error, the savepoint is dropped, causing all soft log information recorded since the savepoint to be deleted and releasing all resources held to guarantee restoration of the user perceived system state at the time of the savepoint request. Responsive to the detection of an error during execution of the module, the logged undo information is used to restore the user perceived state to that existing at the time of the savepoint request.

The invention will now be described with reference to the accompanying drawings.

Figure 1 is a diagrammatic illustration of a database management system including a relational data system, a data manager, and hard and soft logs.

Figure 2 is a diagrammatic illustration of a typical unit of recovery, distinguishing recovery and restore operations.

Figure 3 is a diagram illustrating a typical SQL statement.

Figure 4 is a diagrammatic illustration of various control blocks and data areas comprising the apparatus of the invention and referenced in executing the method of the invention.

Figure 5 is a flow chart illustrating the procedures executed by an execution module implementing an INSERT operation.

Figure 6 is a flow chart illustrating the procedures executed by an execution module implementing an UPDATE or DELETE operation.

Figure 7 is a flow chart illustrating the savepoint operation shown in Figures 5 and 6.

Figure 8 is a flow chart illustrating the restore operation shown in Figures 5 and 6.

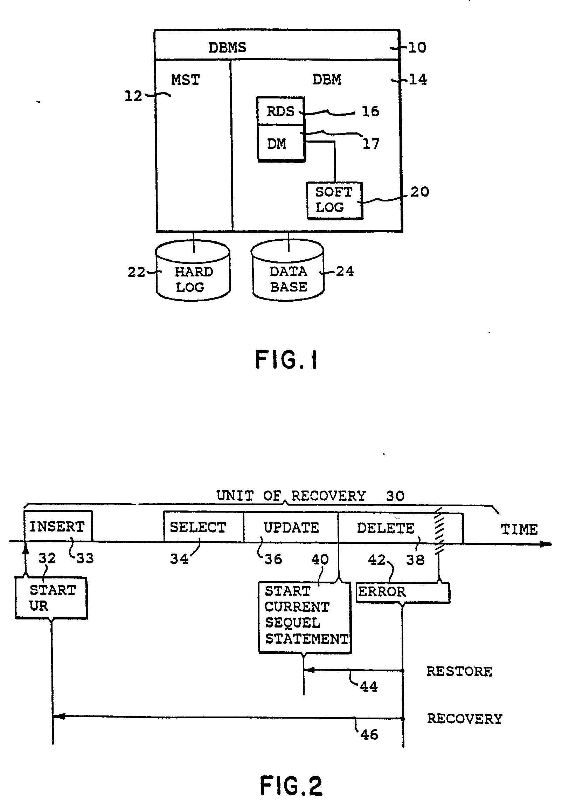

Referring first to Figure 1, a high level storage map is shown illustrating, for example, two private address spaces in an IBM System/370 Multiple Virtual System implementing a database management system (DBMS) 10. The IBM System/370 architecture is described in IBM System/370 *Principles of Operation*, IBM Publication GA22—7000—6. In this embodiment, by way of example, DBMS 10 includes a master (MST) region 12 and a database manager (DBM) region 14. Hard log 22 is maintained under control of MST 12 as is described in EP patent applications of E. Jenner, "Method and Apparatus for Restarting a Computer System", number EP—A—0097234, and of C. Mellow, et al, "Method and Apparatus for Logging Journal Data in a Computing Apparatus", number EP—A—0096199.

Database manager 14 includes a relational data system (RDS) 16 and a data manager (DM) 17 which together manage the creation, modification, access, and deletion of data objects stored in database 24. Such operations may be performed in response to calls from applications or tasks running in allied address spaces (not shown).

The manner in which RDS 16 performs its functions is set forth in further detail in M. W. Blasgen, et al, "System R: An Architectural Overview", *IBM System Journal*, Vol. 20, No. 1, 1981, pages 41—62.

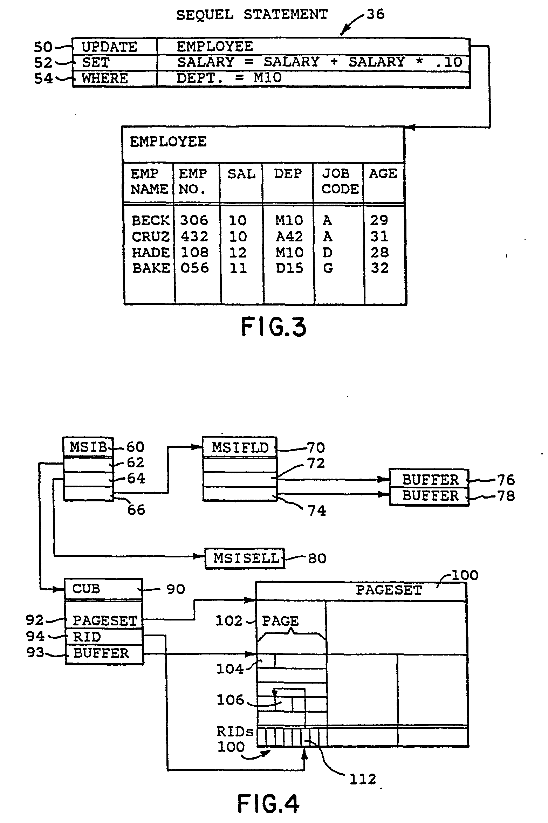

In Figure 3 is set forth a typical SQL statement or request 36, illustrating a command field 50, showing that an UPDATE is to be made to the file named EMPLOYEE, an operation field 52, showing that the SALARY field is to be incremented by 10%, and the selection criteria field 54, showing that the salary field is to be updated for those employees in department M10. The selection field 54 includes one or more predicates, a term which will be further described hereafter.

RDS 16 processes a SQL statement received from an application running in an allied address space into control blocks necessary to invoke the data manager 17 component within DBM 14 and into an execution module. Each execution module comprises a set of machine language instructions which implement the SQL statement being processed. The execution module will include calls to a defined set of protocols in data manager 17 for retrieving and modifying the data in database 24. (This set of protocols is referenced as MSI.)

Referring now to Figure 4, a description will be given of various control blocks passed to the DBM 14 data manager from an execution module for data manipulation operations, including SQL INSERT, UPDATE, DELETE operations. Illustrated in Figure 4 are manipulative system input block (MSIB) 60, manipulative system input field (MSIFLD) 70, manipulative system selection block (MSISELL) 80, cursor block (CUB) 90, and pageset 100. MSIB 60 is the main anchor control block, and includes pointer 62 to CUB 90, pointer 64 to MSISELL 80, and pointer 66 to MSIFLD 70. CUB 90 contains information which identifies the position of the scan in the page set 100. This information includes, among other things, a code which identifies the type of cursor block, pageset 100 identifier 92, and RID number 94 which identifies the RID slot 112 of RIDs 100 which contains a pointer into page 102 to the record 106 to which the scan is positioned. MSISELL 80 specifies "sargable" predicates. Sargable predicates are predicates which have meaning to the data manager component of DBM 14. Non-sargable predicates are predicates which the data manager component cannot handle, and must be checked by RDS 16. MSISELL 80 includes the identifier of the field to which the predicate applies; the operation code of a comparison operator (greater than, less than, equal or greater than, equal or less than, not equal); a pointer to the value to be compared; and any boolean connectors, such as AND, OR. Each MSISELL 80 is used to specify one predicate. Multiple predicates are specified by using a plurality of MSISELLs and the boolean connector field. MSIFLD 70 specifies fields for which values are returned or supplied, and includes the identifier of the field; the field data type; the field length; and a pointer to related buffers 76, 78.

Referring now to Figure 2, a transaction comprising a plurality of SQL statements 33, 34, 36, and 40 is illustrated as a unit of recovery 30. A unit of recovery (UR) is the work done by a process which affects the state of one or more recoverable resources 24 from one point of consistency to another. The scope of a UR may include multiple execution modules. The UR 30 of Figure 2 includes the execution modules which implement SQL statements 33, 34, 36, and 40. The start of the UR is at 32, the beginning of INSERT statement 33, and extends in time to a point beyond the current SQL DELETE statement 38, which begins at point 40. Assume that an error occurs at 42, during execution of a multi-row DELETE operation 38, which is not a system crash or some other loss of volatile storage (including soft log 20). By this invention, a restore operation is provided which restores the database to its point at the beginning 40 of the current SQL statement 40, without impacting changes made within this same UR 30 by, say, SQL UPDATE statement 36. Without this invention, a recovery operation 46 utilizing hard log 22, such as is described in the copending Jenner application, would be necessary. (If the error results in loss of soft log 20, then the recovery operation of Jenner would still be available to recover the database to its state at start UR 32.)

Thus, in performing the procedures of this invention, DM 17 utilizes soft log 20 in main storage and the hard log on DASD 22. Each time a change is made to a data object in a database 24, DM 17 writes or stores a record or records in the hard or soft log. Hard log 22 is used if the pageset is recoverable and if the page containing the update may have been copied to DASD 24. The pageset is considered to be recoverable if the effects of committed changes are guaranteed to survive system failures by DBMS 10. Soft log 20 is used if the pageset is not recoverable or if the page is guaranteed not to have been copied to DASD 24. Each record on hard log 22 representing a change to database 24 includes the following three fields: (1) hard log header, (2) data manager log header, and (3) appendage. The hard log header includes a field specifying the log record type and a field containing a pointer to the previous hard log record. The data manager log header includes the following four fields:

1. A pageset identifier field which identifies the pageset to which the change is made. In this example, a pageset is a set of one to 32 data sets which are logically concatenated to form a linear address space of up to 2**32 bytes. A data set is a specific portion of DASD storage 24 which is read from and written to via the MVS operating system.

2. A page identifier field which identifies the page in the pageset being changed. In this example, a page is a 4096 or 32768 byte contiguous area in a pageset which begins on a 4096 or 32768 byte boundary.

3. A field identifying the DBM 14 data manager 17 procedure which is making the change.

4. A flag indicating whether the hard log record contains UNDO, REDO or UNDO/REDO information. UNDO information is that information required to reverse an update operation in order that it appear that the operation was never performed. REDO information is that information required to re-perform an update operation.

The appendage format depends upon the type of modification. In some cases the appendage will contain before and after images of the data object being changed, and in other cases the appendage will contain information necessary to conduct a reversing operation.

Each time a change is made to a data object in a non-recoverable database 24 and each time a savepoint is established, DM17 stores a soft log record in soft log 20. A soft log 20 record includes the following:

1. A soft log record header, which includes (a) a pointer to the previous soft log 20 record, (b) the length of this log record, and (c) an operation code identifying the log record type.

2. An appendage whose format depends on the log record type.

If the log record is for a data change then the appendage will contain UNDO information. If the log record describes a savepoint, then the appendage will contain the following:

1. A user supplied savepoint name.

2. A pointer to the previous savepoint soft log 20 record.

3. The relative byte address (RBA) of the first hard log 22 record written by the savepoint module writing this soft log record.

4. A list of entries describing cursor blocks (CUBs) whose positions are to be saved, including (a) the record identifier (RID) contained the CUB and (b) the position of the CUB (i.e. CUB position WRT record: before, at, after). A cursor block (CUB) is a DM 17 control block used to maintain position on a row or record in a database. Each CUB represents, among other things, positions within data manager objects such as indexes and page sets 100.

Now, by way of explanation of the operation of the above control blocks and modules, the atomicity protocol of the invention is implemented using a savepoint/restore mechanism provided by the data manager component of DBM 14. These two operations enable any user of the data manager to return the state of database 24 to a predefined point 40 (a savepoint) within UR 30, negating any effects of any modifications which occurred after that point 40.

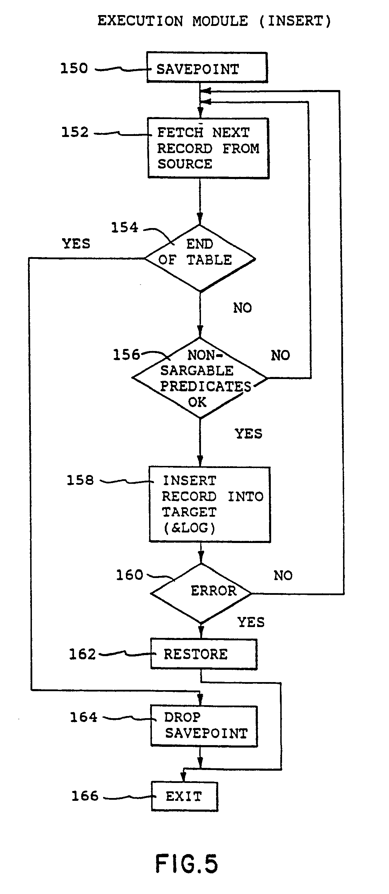

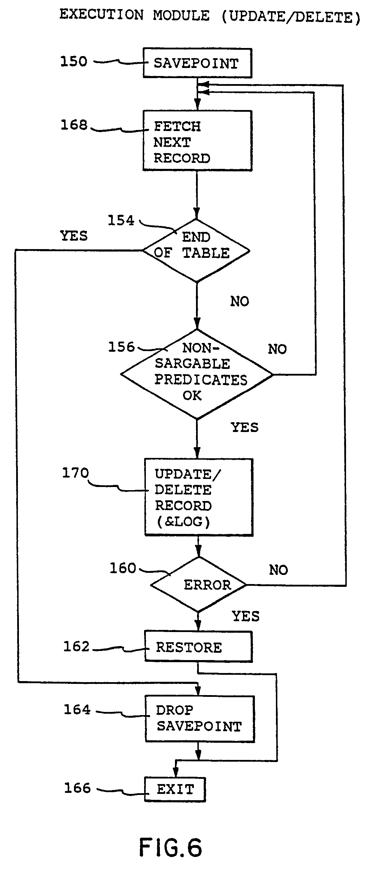

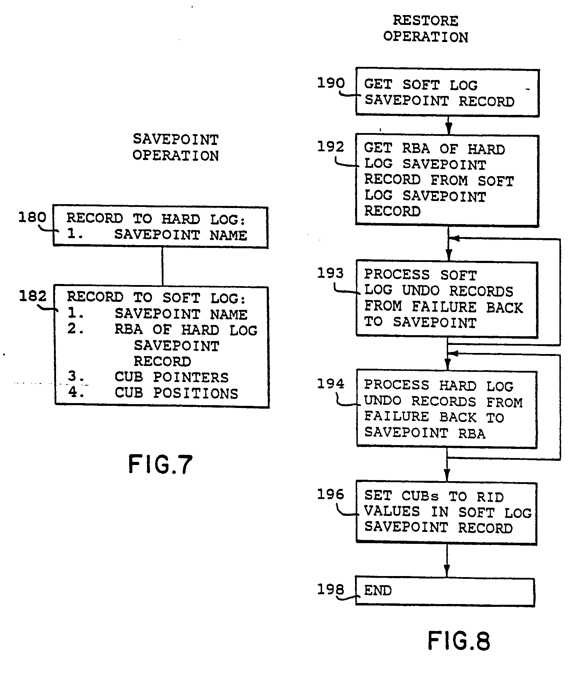

Each execution module which implements a SQL multi-row UPDATE, INSERT, or DELETE utilizes the savepoint and restore operations to guarantee atomicity. These execution modules are set forth in Figures 5 and 6. The execution module for update/delete of Figure 6 is also set forth in pseudo code in Table 3. At the beginning of the execution module, before any database 24 change is made, a savepoint command 150 (see also Figure 7) is issued to the data manager component of DBM 14. As input to this operation, a name, unique within the UR 30, is passed which identifies the savepoint 150 (for the example of Fig. 2, this would be point 40, at the start of the current SQL statement 38), and a list of cursor blocks 90 whose states are to be saved. Table 4 sets forth the create savepoint procedure in pseudo code.

If an error 160 (42) is detected by the execution module (Figures 5 or 6), then a restore 162 is issued (as is illustrated in Figure 8) in which the name specified on the savepoint operation 150 is passed as a parameter. Restore 162 returns the state of all user and system data to what it was at the point 40 at which the savepoint 150 was issued, according to the method set forth in Figure 8 and Table 5, including the steps of getting 190 the soft log 20 savepoint 150 record; getting 192 from the soft log record the RBA of the hard log 22 savepoint 150 record; processing 194 hard log 22 UNDO records from failure 42, 160 back to the savepoint 150 RBA 40; and setting 196 CUBs 90 RDI 94 values to the positions which existed at the savepoint 40, 150.

All execution modules which implement SQL operations which change the state of database 24 use the savepoint 150 and restore 162 operations to insure atomicity. Other SQL operations which are interpreted (such as definitional and authorization statements) rather than having compiled code generated utilize the same approach. That is, a savepoint 150 is issued before any database 24 change is made and a restore 162 is issued if an error is detected after any such database change. The net effect of this implementation is that the SQL user perceives all operations to be atomic, either succeeding completely or leaving database 24 unchanged.

Thus, soft log 20 is created in volatile storage for each unit of recovery and is managed on a last-in first-out (LIFO) basis. When the data manager 17 component of DBM 14 is required to make any change to a CUB 90 or to a non-recoverable data page or to a recoverable page which is guaranteed not to have been

4

copied to DASD 24, it inserts a record into the soft log 20 for the unit of recovery (UR) requesting the change. This record contains precisely the information required to undo the effects of the modification to the CUB 90 or data page 102. The name of the module to be invoked to accomplish the undo operation is also specified in the soft log 20 record. The hard log 22 is used to record both UNDO and REDO information for changes made to data pages 102 which may have been copied to DASD 24 and REDO only information for pages which are guaranteed not to have been copied to DASD.

If an execution module (Figure 5 or 6) in a UR 30 issues a savepoint 150 command then a special record with the specified savepoint name is inserted into both soft log 20 and hard log 22. If a restore 162 is issued then the UNDO records are read and removed from both logs 20, 22 in LIFO order 44, and the described operations performed until the savepoint 150 record containing the name specified on the restore 162 is found.

It is also possible for multiple savepoints 150 to be stacked by a UR 30. Consider, for example, a UR which has issued two savepoint 150 commands with no restore 162 command between them. The contents of the soft log 20 would appear as in Table 1: Stacked Savepoints.

TABLE 1:   STACKED SAVEPOINTS

SAVEPOINT SP1

undo-record-1

undo-record-2

.

.

.

undo-record-i

SAVEPOINT SP2

undo-record-i+1

undo-record-i+2

.

.

.

undo-record-k

At this point, the UR could issue RESTORE SP2, which would back out all changes to the database 24 made since savepoint SP2. The soft log 20 would then contain the information set forth in Table 2: Stacked Savepoints With Restore.

TABLE 2:   STACKED SAVEPOINTS WITH RESTORE

SAVEPOINT SP1

undo-record-1

undo-record-2

.

.

.

undo-record-i

If, however, RESTORE SP1 was issued, then all records of soft log 20 are processed and deleted.

In order to enhance the efficiency of the UNDO process, the data manager component of DBM 14 may adopt the strategy that each soft log 20 record describes a change to a single page 102 of storage and that this change can be applied using only information contained in the page 102 and the log 20, 22 record. Thus, no other pages, directories, or catalogs need to be accessed to accomplish UNDO.

The data manager component of DBM 14 simplifies the atomicity protocol of the invention by providing an operator which allows other components to write records in soft log 20 or in hard log 22. Thus, modifications to resources managed by other components can be backed out with this mechanism. The data manager component of DBM 14 also uses soft log 20 and hard log 22 to guarantee the atomicity of its own operations. Thus, any component using the data manager component of DBM 14 need not be concerned with the consistency of data 24 between calls.

Soft log 20 is the critical component for this preferred embodiment of the atomicity protocol of the invention because it provides a centralized mechanism for managing the information required to undo changes to user and system data.

```
TABLE 3    UPDATE/DELETE EXECUTION MODULE

10    Establish Savepoint (call DM)
12    error=no;
14    rnf=no;

18    DO UNTIL rnf=yes or error=yes;/*repeat until */
                       /*last record or error occurs*/
20      fetch next record;/*call to DM passing MSIB*/
22      If record not found
24        THEN rnf=yes;
26        ELSE
28           IF error returned by DM
30              THEN error=yes
32              ELSE
34                 check non-sargable predicates;
36                 IF non-sargable predicates satisfied THEN
38                    DO; /*record satisfies all SQL predicates*/
40                       update/delete record /*call to DM       */
41                                            /*passing MSIB     */
42                       IF error returned by DM
44                          THEN error=yes;
46                          ELSE;
48                       END;
50                    ELSE;
52    END; /* or DO UNTIL rnf=yes or error=yes*/

56    IF err=yes
58      THEN restore savepoint;/*call to DM passing SVPT block*/
60      ELSE drop savepoint;   /*call to DM passing SVPT block*/

64    RETURN;
66    END;
```

TABLE 4    CREATE SAVEPOINT (SVPT)

```
80   Compute length of appendage of soft log record.
82   If some or all CUBs to be saved THEN
83     DO.
84       Case of all CUBs to be saved.
85         DO for all CUBs.
86           Add contribution to soft log record for CUB if
88             it is recoverable.
90         END.
92         Change all lock durations to commit.
94       END case.
96       Case of some CUBs to be saved.
98         DO for all CUBs to be saved.
100          IF CUB to be saved and it is recoverable THEN
102            DO.
104              Add contribution to soft log record for CUB.
106              IF page lock held by CUB change the lock
108                duration to commit to guarantee the
110                page can be re-accessed during restore.
112              IF index leaf lock held by CUB change the
114                lock duration to commit to guarantee the
116                page can be re-accessed during restore.
118            END.
120          END.
122        END case.
124    END
126  IF UR is recoverable THEN write a savepoint hard log
128    record.
130  Write a savepont soft log record.
132  Increment count of outstanding savepoints.
134  Add to the soft log the CUB flags and position
136    information for all CUBs to be saved.
```

TABLE 5   RESTORE SAVEPOINT

```
200  Search the chain of savepoint log records in the
202    soft log backwards until the savepoint
204    with the name = supplied name is found.
206  DO for each record in the soft log UNTIL the
208      savepoint record is reached beginning with
210      the last record in the soft log.
212    IF the record is not a savepoint record THEN
214      Invoke the UNDO routine for the records.
216    ELSE                              -
218      DO.
220        DO for each CUB that was saved.   -
222          IF the CUB has a buffer THEN
224            Free it.
225          Move from the soft log record to the
226            CUB the flags and position information
228              that was saved.
230          Decrement count of outstanding savepoints.
232        END.
234      END.
236    Get the address of the previous record in the
238        soft log.
240  END.
242  IF the UR is recoverable THEN
244    Save the log RBA of the hard log savepoint
246        record.
248    Reset the soft log to the beginning of the
250        savepoint record which was restored to.
252    IF the UR is recoverable THEN
254      DO.
256        DO for each UR-related record in LIFO order.
258          UNTIL the log RBA - RBA of the hard log
260            savepoint record.
262          IF the record contains UNDO information
263              THEN
264            Invoke the UNDO procedure to process
266                the record.
268      END.
270    END.
```

TABLE 6   DROP SAVEPOINT

```
300  If no savepoint is outstanding then
302  return error code.
304  Locate the last savepoint log record.
306  Reset the soft log to the beginning
308  of the savepoint record.
310  Decrement count of outstanding
312  savepoints.
```

**Claims**

1. A method for restoring data in a computing system including a database management system which provides for multi-row operations with respect to data objects, characterized by the steps of:

logging selectively to a soft log (20) in main storage and to a hard log (22) in non-volatile storage changes made to said data objects;

responsive to an error (42) not involving loss of information in the soft log, restoring said data objects to their state at the beginning (40) of the current multi-row operation (38); and

responsive to an error (42) involving loss of information in the soft log, restoring said data objects to their state at the beginning (32) of the unit of recovery (30) including the current multi-row operation (38).

2. The method of claim 1 wherein the step of logging to the hard log (22) changes made to the data objects includes the steps of:

recording in a hard log record an identifier of the data object being changed and an identifier of the resource manager making the change;

recording in the hard log record selectively UNDO, or REDO, or both UNDO and REDO information; and

responsive to an error involving loss of information in said soft log, restoring said data objects to their state at the beginning of the unit of recovery by reference to said UNDO information.

3. The method of claim 2 wherein said UNDO information contains either before and after images of the data object being changed or the information necessary to conduct a reversing operation.

4. The method of claims 1 and 2 wherein the step of logging to the soft log changes made to the data objects includes the steps of:

recording in a soft log record a pointer to the previous soft log record and the log record type; and recording in the soft log record UNDO information.

5. The method of claim 1 wherein data objects stored in multi-row tables are updated, deleted and inserted, including the steps of:

selectively operating on a data object by performing an update, delete or insert operation;

recording in a hard log a record of the operation if made to a data object where the data object is recoverable and the data object operated on may have been copied to non-volatile storage; and

recording in a soft log a record of the operation if made to a data object where the data object is not recoverable or if the data object operated on is guaranteed not to have been copied to non-volatile storage.

6. The method of claim 5 comprising the further steps:

recording a hard log savepoint record including a savepoint name at the beginning of a multi-row operation;

recording a soft log savepoint record at the beginning of the multi-row operation, the soft log savepoint record including the savepoint name, a pointer to the hard log savepoint record written for this multirow operation, and a list of identifiers of cursor blocks positions to be saved; and

responsive to a failure occurring during the multi-row operation, restoring the table to its state at the time of recording the savepoint record.

7. The method of claim 6 comprising the further steps:

obtaining from the soft log savepoint record the location of the hard log savepoint record and identifiers of cursor blocks to be saved;

processing hard log UNDO records from the point of the failure back to the hard log savepoint record; and

restoring the cursor blocks identified by the soft log savepoint record to their positions at the time of the savepoint.

8. The method of claim 6 comprising the further step of stacking a plurality of savepoint records with respect to a plurality of multi-row operations.

9. The method of claim 6 comprising the further step of dropping savepoint records with respect to a multi-row operation which successfully concludes without failure.

10. The method according to any of the claims 1—9 wherein user requested multi-row update operations to tables of the type including UPDATE, INSERT, and DELETE that fails, are generating the operation steps of:

in response to an update operation request, establishing an execution module containing machine language code instructions implementing the update operation request with a savepoint request at the beginning of said execution module;

for each set of instructions in or called by the execution module which modifies the user perceived system state, selectively recording UNDO information in a soft or hard log;

upon completing an execution module, dropping the savepoint, causing all soft log information recorded since the savepoint to be deleted and releasing all resources held to guarantee restoration of the user perceived system state at the time of the savepoint request;

upon detecting an error and responsive to UNDO information recorded in the soft and/or hard log, restoring the user perceived state to that at the time of the savepoint request.

11. Apparatus for restoring data in a computing system executing user requested multi-row update operations of the type including UPDATE, DELETE, and INSERT to tables in a relational database, characterized by:

means (16) responsive to an update operation request for establishing an execution module containing machine language code instructions implementing the update operation request with a savepoint request at the beginning of said execution module;

means for recording UNDO information in a soft log (20) for each set of instructions in or called by the execution module which modifies the user perceived system state;

means for dropping the savepoint upon completing an execution module, thereby causing all soft log information recorded since the savepoint to be deleted and releasing all resources held to guarantee restoration of the user perceived system state at the time of the savepoint request; and

means responsive to UNDO information recorded in the soft log and operative upon detecting an error for restoring the user perceived state to that at the time of the savepoint request;

said means guaranteeing that for any update operation that succeeds all stated effects will have occurred and that for any update operation that fails the system state as perceived by the user remains unchanged.

**Patentansprüche**

1. Verfahren zur Wiederherstellung von Daten in einem Rechensystem, welches ein Datenbankmanagementsystem enthält, das Mehrreihenoperationen in Bezug auf Datenobjekte liefert, gekennzeichnet durch die Verfahrensschritte des

ausgewählten Protokollierens in einen Soft-Log (20) in Hauptspeicher und in einen Hard-Log (22) in nicht-flüchtigem Speicher von Änderungen, die an Datenobjekten vorgenommen werden,

ansprechend auf einen Fehler (42), der keinen Verlust von Informationen im Soft-Log beinhaltet, Wiederherstellens der Datenobjekte in ihren Zustand am Anfang (40) der laufenden Mehrreihenoperation (38), und

ansprechend auf einen Fehler (42), welcher einen Verlust von Information im Soft-Log beinhaltet, (30), welche die laufende Mehrreihenoperation (38) enthält.

2. Verfahren nach Anspruch 1, bei welchem der Verfahrensschritt des Protokollierens in den Hard-Log (22) von Änderungen, die an den Datenobjekten vorgenommen wurden, die Verfahrensschritten des

Aufzeichnens eines Identifizierers des gerade geändertwerdenden Datenobjekts in einer Hard-Log-Aufzeichnung und eines Identifizierers des die Änderung vornehmenden Resource-Managers,

ausgewählten Aufzeichnens, in der Hard-Log-Aufzeichnung, von UNDO- oder REDO- oder von sowohl UNDO- als auch REDO-Information, und

ansprechend auf einen Fehler, welcher einen Verlust von Information in dem Soft-Log beinhaltet, Wiederherstellens der Datenobjekte in ihren Zustand am Anfang der Einheit der Rückgewinnung durch Bezugnahme auf die UNDO-Information beinhaltet.

3. Verfahren nach Anspruch 2, bei welchem die UNDO-Information entweder davor oder danach Abbilder des in Änderung befindlichen Datenobjekts oder die Information, die zur Durchführung einer Umkehroperation erforderlich ist, enthält.

4. Verfahren nach Anspruch 1 oder 2, bei welchem der Verfahrensschritt des Protokollierens in den Soft-Log von Änderungen, die an den Datenobjekten durchgeführt wurden, die Verfahrensschritte des

Aufzeichnens, in einer Soft-Log-Aufzeichnung, eines Zeigers auf die vorhergehende Soft-Log-Aufzeichnung und des log-Aufzeichnungstyps, und

Aufzeichnens von UNDO-Information in der Soft-Log-Aufzeichnung enthält.

5. Verfahren nach Anspruch 1, bei welchem in Mehrreihentabellen gespeicherte Datenobjekte aktualisiert, gelöscht und eingefügt werden, mit den Verfahrensschritten des

ausgewählten Arbeitens auf einem Datenobjekt durch Durchführung einer Aktualisierung-, Lösch- und Einfügeoperation,

Aufzeichnens, in einem Hard-Log, einer Aufzeichnung der Operation, wenn sie an einem Datenobjekt durchgeführt wird, wo das Datenobjekt wiedergewinnbar ist und das Datenobjekt, auf dem gearbeitet wird, auf nicht-flüchtige Speicherung kopiert worden sein kann, und

Aufzeichnens, in einem Soft-Log, einer Aufzeichnung der Operation, wenn sie an einem Datenobjekt durchgeführt wird, wo das Datenobjekt nicht wiedergewinnbar ist, oder wenn das Datenobjekt, auf dem gearbeitet wird, garantiert nicht auf nicht-flüchtige Speicherung kopiert worden ist.

6. Verfahren nach Anspruch 5, welches die weiteren Verfahrensschritte des

Aufzeichnens einer einen Sicherungspunktnamen enthaltenden Hard-Log-Sicherungspunktaufzeichnung am Beginn einer Mehrreihenoperation,

Aufzeichnens einer Soft-Log-Sicherungspunktaufzeichnung am Beginn der Mehrreihenoperation, wobei die Softlog-Sicherungspunktaufzeichnung einer Sicherungspunktnamen, einen Zeiger auf die für diese Mehrreihenoperation geschriebene Hard-Log-Sicherungspunktaufzeichnung und eine Liste von Identifizieren von zu sichernden Cursorblöcke-Positionen enthält, und

ansprechend auf einen während der Mehrreihenoperation auftretenden Ausfall, Wiederherstellens der Tabelle auf ihren Zustand zur Zeit des Aufzeichnens der Sicherungspunktaufzeichnung, umfaßt.

7. Verfahren nach Anspruch 6, welches die weiteren Verfahrensschritte des

Gewinnens, aus der Soft-Log-Sicherungspunktaufzeichnung, des Platzes der Hard-Log-Sicherungspunktaufzeichnung und der Identifizierer von zu sichernden Cursorblöcken,

Verarbeitens von Hard-Log-UNDO-Aufzeichnungen von dem Punkt des Ausfalls zurück zur Hard-Log-Sicherungspunktaufzeichnung, und

Wiederherstellens der durch die Soft-Log-Sicherungspunktaufzeichnung identifizierten Cursorblöcke in ihre Positionen zur Zeit des Sicherungspunkts, umfaßt.

8. Verfahren nach Anspruch 6, welches den weiteren Verfahrensschritt des Stapelns einer Anzahl von

## EP 0 097 239 B1

Sicherungspunktaufzeichnungen in Bezug auf eine Anzahl von Mehrreihenoperationen umfaßt.

9. Verfahren nach Anspruch 6, welches ferner den Verfahrensschritt des Fallenlassens von Sicherungspunktaufzeichnungen in Bezug auf eine Mehrreihenoperation, welche erfolgreich ohne Ausfall abschließt, umfaßt.

10. Verfahren nach irgendeinem der Ansprüche 1 bis 9, bei welchem benutzerangeforderte Mehrreihenaktualisierungsoperationen an Tabellen des Typs, welcher UPDATE, INSERT und DELETE, der ausfällt, enthält, die Operationsschritte des

Erstellens, ansprechend auf eine Aktualisierungsoperationsanforderung, eines Ausführungsmoduls, welcher Maschinensprachencode-Befehle enthält, welche die Aktualisierungsoperationsanforderung umsetzen, mit einer Sicherungspunktanforderung am Beginn des Ausführungsmoduls,

des ausgewählten Aufzeichnens von UNDO-Information in einem Soft- oder Hard-Log für jeden Satz von Befehlen in dem oder aufgerufen durch den Ausführungsmodul, welcher den benutzerwahrgenommenen Systemzustand modifiziert,

bei Beendigung eines Ausführungsmoduls, Fallenlassens des Sicherungspunkts, was bewirkt, daß die gesamte Soft-Log-Information, die seit dem Sicherungspunkt aufgezeichnet worden ist, gelöscht wird und alle Resourcen freigegeben werden, die gehalten wurden, um eine Wiederherstellung des benutzerwahrgenommen Systemzustands zum Zeitpunkt der Sicherungspunktanforderung zu garantieren,

bei Feststellung eines Fehlers und ansprechend auf in einem Soft- und/oder Hard-Log aufgezeichnete UNDO-Information, Wiederherstellens des benutzerwahrgenommenen Zustands auf denjenigen vom Zeitpunkt der Sicherungspunktanforderung erzeugen.

11. Vorrichtung zur Wiederherstellung von Daten in einem Rechensystem, welches benutzerangeforderte Mehrreihen-Aktualisierungsoperationen des Typs, welcher UPDATE, DELETE und INSERT enthält, auf Tabellen in einer relationalen Datenbank durchführt, gekennzeichnet durch

Mittel (16), die auf eine Aktualisierungsoperationsanforderung ansprechen, zur Herstellung eines Ausführungsmoduls, welcher Maschinensprachencodebefehle enthält, welche die Aktualisierungsoperationsanforderung umsetzen, mit einer Sicherungspunktanforderung am Beginn des Ausführungsmoduls,

Mittel zum Aufzeichnen von UNDO-Information in einem Soft-Log (20) für jeden Befehlssatz in dem oder aufgerufen durch den Ausführungsmodul, welcher den benutzerwahrgenommenen Systemzustand modifiziert,

Mittel zum Fallenlassen des Sicherungspunkts mit Beendigung eines Ausführungsmoduls, wodurch bewirkt wird, daß die gesamte seit dem Sicherungspunkt aufgezeichnete Soft-Log-Information gelöscht wird und alle Resourcen freigegeben werden, die gehalten wurden, um eine Wiederherstellung des benutzerwahrgenommenen Systemzustands zum Zeitpunkt der Sicherungspunktanforderung zu garantieren, und

Mittel, die auf eine im Soft-Log aufgezeichnete UNDO-Information ansprechen und mit Feststellung eines Fehlers wirksam werden, zum Wiederherstellen des benutzerwahrgenommenen Zustands auf denjenigen zum Zeitpunkt des Sicherungspunktanforderung,

wobei die Mittel garantieren, daß für jede Aktualisierungsoperation, die folgt, alle angegebenen Effekte aufgetreten sind, und daß für jede Aktualisierungsoperation, die ausfällt, der Systemzustand, so wie er vom Benutzer wahrgenommen wird, unverändert bleibt.

### Revendications

1. Un procédé pour restaurer des données dans un système informatique comprenant un système de gestion de base de données autorisant des opérations sur plusieurs lignes relatives à des données objets, caractérisé par les étapes suivantes:

inscription sélective, dans un journal de bord provisoire (20) de la mémoire principale et dans un journal de bord permanent (22) d'une mémoire non volatile, des modifications apportées à ces données objets,

à la suite d'une erreur (42) n'entraînant pas de perte d'information dans le journal de bord provisoire, restauration de ces données objets à l'état qu'elles avaient au début (40) de l'opération (38) sur plusieurs lignes en cours, et

à la suite d'une erreur (42) entraînant une perte d'information dans le journal de bord provisoire, restauration de ces données objets à l'état qu'elles avaient au début (32) de l'unité de reprise dont faisait partie l'opération (38) sur plusieurs lignes en cours.

2. Le procédé de la revendication 1, dans lequel l'étape d'inscription dans le journal de bord permanent (22) des modifications apportées aux données objets comprend les étapes suivantes:

inscription dans un enregistrement du journal de bord permanent d'un identificateur de la donnée objet en cours de modification et d'un identificateur du gestionnaire de ressources exécutant la modification,

inscription sélective, dans l'enregistrement du journal de bord permanent, d'une information DÉFAIRE, REFAIRE, ou à la fois DÉFAIRE et REFAIRE, et

à la suite d'une erreur entraînant une perte d'information dans le journal de bord provisoire, restauration par référence à ladite information DÉFAIRE des données objets à l'état qu'elles avaient au début de ladite unité de reprise.

11

3. Le procédé de la revendication 2, dans laquelle ladite information DÉFAIRE contient soit des images antérieures et postérieures de la donnée objet à modifier soit les informations nécessaires à l'exécution d'une opération inverse.

4. Le procédé de la revendication 1 et 2, dans lequel l'étape d'inscription, dans la journal de bord provisoire, des modifications apportées aux données objets comprend les étapes suivantes:

inscription dans un enregistrement du journal de bord provisoire d'un pointeur pointant sur l'enregistrement précédent du journal de bord provisoire et du type d'enregistrement de journal de bord, et

inscription d'une information DÉFAIRE dans l'enregistrement du journal de bord provisoire.

5. Le procédé de la revendication 1, dans lequel on met à jour, on supprime et on insère des données objets mémorisées dans des tables à plusieurs lignes, comprenant les étapes suivantes:

traitement sélectif d'une donnée objet par exécution d'une opération de mise à jour, de suppression ou d'insertion,

inscription dans un journal de bord permanent d'un enregistrement de l'opération si celle-ci concerne une donnée objet récupérable et s'il se peut que la donnée objet traitée ait été recopiée en mémoire non volatile et,

inscription dans un journal de bord provisoire d'un enregistrement de l'opération si celle-ci concerne une donnée objet non récupérable ou si l'on est certain que la donnée objet traitée n'a pas été recopiée en mémoire non volatile.

6. Le procédé de la revendication 5, comprenant en outre les étapes suivantes:

inscription dans le journal de bord permanent d'un enregistrement de point de sauvegarde comprenant un nom de point de sauvegarde en début d'une opération portant sur plusieurs lignes,

inscription dans le journal de bord provisoire d'un enregistrement de point de sauvegarde en début de l'opération portant sur plusieurs lignes, l'enregistrement de point de sauvegarde dans le journal de bord provisoire comprenant le nom du point de sauvegarde, un pointeur pointant sur l'enregistrement de point de sauvegarde que l'on a inscrit dans le journal de bord permanent pour cette opération portant sur plusieurs lignes, et une liste d'identificateurs de positions de blocs curseurs à sauvegarder, et

à la suite d'un incident apparaissant au cours de l'opération portant sur plusieurs lignes, restauration de la table à l'état qu'elle avait au moment de l'inscription de l'enregistrement de point de sauvegarde.

7. Le procédé de la revendication 6, comprenant en outre les étapes suivantes:

obtention, à partir de l'enregistrement du point de sauvegarde dans le journal de bord provisoire, de l'emplacement de l'enregistrement de point de sauvegarde dans le journal de bord permanent et des identificateurs des blocs curseurs à sauvegarder,

traitement des enregistrements DÉFAIRE du journal de bord permanent qui sont compris entre le moment de l'incident et celui de l'enregistrement du point de sauvegarde dans le journal de bord permanent, et

restauration, aux positions qu'ils avaient au moment du point de sauvegarde, des blocs curseurs identifiés par l'enregistrement de point de sauvegarde dans le journal de bord provisoire.

8. Le procédé de la revendication 6, comprenant en outre l'étape consistant à mémoriser sous forme d'une pile une pluralité d'enregistrements de point de sauvegarde correspondant à une pluralité d'opérations portant sur plusieurs lignes.

9. Le procédé de la revendication 6, comprenant en outre l'étape consistant à abandonner les enregistrements de point de sauvegarde correspondant à une opération portant sur plusieurs lignes qui réussit à aboutir sans incident.

10. Le procédé de l'une des revendications 1 à 9, dans lequel des opérations, demandées par l'utilisateur, de mise à jour de tables portant sur plusieurs lignes, opérations du type comprenant METTRE A JOUR, INSÉRER et SUPPRIMER, qui échouent, produisent les opérations des étapes suivantes:

à la suite d'une demande d'opération de mise à jour, établissement d'un module exécutable contenant des instructions de code en language machine réalisant la demande d'opération de mise à jour, avec une demande de point de sauvegarde au début dudit module exécutable,

pour chaque série d'instructions du module exécutable, ou d'instructions appelées par celui-ci, qui modifie l'état du système tel que perçu par l'utilisateur, enregistrement sélectif d'une information DÉFAIRE dans un journal de bord provisoire ou un journal de bord permanent,

à l'achèvement d'un module exécutable, abandon du point de sauvegarde, provoquant ainsi la suppression de toutes les informations du journal de bord provisoire enregistrées depuis le point de sauvegarde ainsi que la libération de toutes les ressources réservées afin de garantir la restauration de l'état du système tel que perçu par l'utilisateur au moment de la requête de point de sauvegarde,

en cas de détection d'une erreur et en réponse à une information DÉFAIRE enregistrée dans le journal de bord provisoire et/ou dans le journal de bord permanent, restauration, à l'état qu'il avait au moment de la requête de point de sauvegarde, de l'état du système tel que perçu par l'utilisateur.

11. Un dispositif pour restaurer des données dans un système informatique exécutant des opérations, demandées par un utilisateur, de mise à jour de tables d'une base de données relationnelle, opérations portant sur plusieurs lignes et étant du type comprenant METTRE A JOUR, SUPPRIMER, et INSÉRER, caractérisé par:

des moyens (16) pour établir, à la suite d'une demande d'opération de mise à jour, un module exécutable contenant des instructions de code en language machine réalisant la demande d'opération de mise à jour, avec une demande de point de sauvegarde au début dudit module exécutable,

des moyens pour enregistrer dans un journal de bord provisoire (20) une information DÉFAIRE pour chaque série d'instructions du module exécutable, ou d'instructions appelées par celui-ci, qui modifie l'état du système tel que perçu par l'utilisateur,

des moyens pour abandonner le point de sauvegarde à l'achèvement d'un module exécutable, provoquant ainsi la suppression de toutes les informations du journal de bord provisoire enregistrées depuis le point de sauvegarde ainsi que la libération de toutes les ressources réservées afin de garantir la restauration de l'état du système tel que perçu par l'utilisateur au moment de la requête de point de sauvegarde,

des moyens, fonctionnant en réponse à une information DÉFAIRE enregistrée dans le journal de bord provisoire et opérant en cas de détection d'une erreur, pour restaurer, à l'état qu'il avait au moment de la requête de point de sauvegarde, l'état du système tel que perçu par l'utilisateur,

ces moyens garantissant que, pour toute opération de mise à jour réussie, tous les effets spécifiés aurant eu lieu et que, pour toute opération de mise à jour qui échoue, l'état du système tel que perçu par l'utilisateur restera inchangé.

FIG. 1

FIG.2

1

SEQUEL STATEMENT 36

| 50 | UPDATE | EMPLOYEE |
|---|---|---|
| 52 | SET | SALARY = SALARY + SALARY * .10 |
| 54 | WHERE | DEPT. = M10 |

**EMPLOYEE**

| EMP NAME | EMP NO. | SAL | DEP | JOB CODE | AGE |
|---|---|---|---|---|---|
| BECK | 306 | 10 | M10 | A | 29 |
| CRUZ | 432 | 10 | A42 | A | 31 |
| HADE | 108 | 12 | M10 | D | 28 |
| BAKE | 056 | 11 | D15 | G | 32 |

**FIG.3**

**FIG.4**

EXECUTION MODULE (INSERT)

FIG.5

EXECUTION MODULE (UPDATE/DELETE)

FIG.6

RESTORE
OPERATION

190 ☐ GET SOFT LOG
SAVEPOINT RECORD

192 ☐ GET RBA OF HARD
LOG SAVEPOINT
RECORD FROM SOFT
LOG SAVEPOINT
RECORD

SAVEPOINT
OPERATION

180 ☐ RECORD TO HARD LOG:
1.  SAVEPOINT NAME

182 ☐ RECORD TO SOFT LOG:
1.  SAVEPOINT NAME
2.  RBA OF HARD LOG
SAVEPOINT
RECORD
3.  CUB POINTERS
4.  CUB POSITIONS

193 ☐ PROCESS SOFT
LOG UNDO RECORDS
FROM FAILURE BACK
TO SAVEPOINT

194 ☐ PROCESS HARD LOG
UNDO RECORDS FROM
FAILURE BACK TO
SAVEPOINT RBA

**FIG.7**

196 ☐ SET CUBs TO RID
VALUES IN SOFT LOG
SAVEPOINT RECORD

198 ☐ END

**FIG.8**

5